# EUROPÄISCHE PATENTSCHRIFT

(11) **EP 1 544 501 B1**
(45) Veröffentlichungstag und Bekanntmachung des Hinweises auf die Patenterteilung: **01.10.2008**
(21) Anmeldenummer: 04029417.5
(22) Anmeldetag: 13.12.2004
(51) Int. Cl.: F16F 13/26

(54) **Hydraulisch dämpfendes Stützlager**
Hydraulically damped support bearing
Palier de support à amortissement hydraulique

(30) Priorität: 18.12.2003 DE 10359639
(43) Veröffentlichungstag der Anmeldung: 22.06.2005
(73) Patentinhaber: Carl Freudenberg KG, 69469 Weinheim (DE)
(72) Erfinder: Winkler, Gerold, 69488 Birkenau (DE)
(74) Vertreter: Ripper, Monika Sigrid

(56) Entgegenhaltungen:
- WO-A-03/081079
- US-A- 5 601 280
- PATENT ABSTRACTS OF JAPAN Bd. 1997, Nr. 11, 28. November 1997 (1997-11-28) & JP 09 177870 A (BRIDGESTONE CORP), 11. Juli 1997 (1997-07-11)
- PATENT ABSTRACTS OF JAPAN Bd. 2002, Nr. 05, 3. Mai 2002 (2002-05-03) & JP 2002 013584 A (BRIDGESTONE CORP), 18. Januar 2002 (2002-01-18)

## Beschreibung

Die Erfindung betrifft ein Stützlager gemäß dem Oberbegriff des Patentanspruchs 1.

Aus dem Stand der Technik sind viele Möglichkeiten zum Verschließen der Öffnung des Tilgerkanals bekannt. So existieren Lösungen, bei denen die Tilgerkanalöffnung mit einer Stahlfeder verschlossen und durch einen Unterdruck geöffnet wird. Dabei wird der Stopfen von der Ausgleichskammer aus gegen die Öffnung gepresst. Unterdrücke werden jedoch zukünftig in einem Kraftfahrzeug nicht mehr verfügbar sein. Deshalb gibt es auch Lösungen, die zum Verschließen und Öffnen der Tilgerkanalöffnung Elektromotore verwenden, die den Stopfen von der Ausgleichskammer aus gegen die Tilgerkanalöffnung drücken. Da in der Arbeitskammer jedoch sehr hohe Drücke herrschen können, die im Spitzenbereich um fünf bar liegen, sind Getriebe erforderlich, damit der Stopfen bei solchen Druckspitzen gegen die Öffnung gepresst werden kann. Diese Getriebe sind jedoch bezüglich Wärmeausdehnung und Verschmutzung problematisch, weshalb es zu Funktionsstörungen des Stützlagers kommen kann.

Aus der US 5,601,280 A ist ein Stützlager mit einem Stopfen bekannt, welcher eine flache Oberfläche aufweist. Aus der JP 09 177 870 A ist ebenfalls ein Stützlager bekannt, welches einen flachen Stopfen aufweist. Die JP 2002 013584 A offenbart ein Stützlager mit einem Stopfen, der eine Kegelform aufweist. Die DE 92 12 871 U offenbart ein Stützlager mit einem Stopfen, der pilzförmig ausgebildet ist. Schließlich offenbart die DE 101 21 399 A1 ein Stützlager mit einem Stopfen, der eine flache Oberfläche aufweist.

Der Erfindung liegt die Aufgabe zugrunde, ein Stützlager derart auszugestalten und weiterzubilden, dass ein Verfahren und Festlegen des Stopfens problemlos und materialschonend realisierbar sind.

Die Erfindung löst die gestellte Aufgabe durch ein Stützlager der eingangs genannten Art, bei dem der Stopfen einen abgerundeten oberen und einen kegelartigen unteren Bereich aufweist und mit dem kegelartigen unteren Bereich in Richtung Ausgleichkammer selbstzentriert in die Tilgerkanalöffnung einführbar und gegen diese pressbar ist. Bei dieser Lösung wird der Stopfen durch den in der Arbeitskammer wirkenden Druck gegen die Tilgerkanalöffnung gedrückt. Folglich kann ein den Stopfen antreibender Motor erheblich kleiner dimensioniert werden als bisher, um mit dem Stopfen die Tilgerkanalöffnung auch bei Druckspitzen geschlossen zu halten. Außerdem ist es möglich auf ein Getriebe ganz zu verzichten oder es ebenfalls kleiner auszulegen. Bei Verzicht auf das Getriebe können Funktionsstörungen des Stützlagers zukünftig deutlich reduziert werden.

Da elektrische Energie im Kraftfahrzeug während seines Betriebes verfügbar ist, kann der Stopfen durch einen Elektromotor angetrieben werden.

In einer bevorzugten Ausführungsform kann der Stopfen durch einen Gleichstrommotor angetrieben werden. Gleichstrommotoren sind bekanntermaßen kostengünstige Bauteile, so dass ihre Verwendung zur Kostenreduzierung des Stützlagers beiträgt.

In einer Weiterbildung der Erfindung kann der Gleichstrommotor mit einem Hall-Geber ausgerüstet sein. Der Hall-Geber übernimmt dann die Funktion der Wegabfrage, um festzustellen in welcher Position sich der Stopfen befindet.

In einer anderen Ausführungsform ist es jedoch auch möglich, den Gleichstrommotor mit einem induktiven Wegaufnehmer auszurüsten, der dann die Funktion der Wegabfrage übernimmt.

In einer besonders eleganten Ausführungsform kann der Stopfen durch einen Schrittmotor angetrieben werden. Durch den Schrittmotor kann ohne weitere Zusatzkomponenten die Position des Stopfens bestimmt werden.

Zweckmäßigerweise ist der Stopfen mit einer Antriebsspindel versehen. Der Stopfen und die Antriebsspindel können einstückig ausgebildet sein, wodurch die Fertigungskosten des Stützlagers reduziert werden.

Bei der einstückigen Ausführungsform von Stopfen und Antriebsspindel können der Stopfen und die Antriebsspindel aus Kunststoff preiswert hergestellt werden.

In einer anderen Ausführungsform ist es jedoch auch möglich den Stopfen und die Antriebsspindel zweiteilig auszuführen, wobei der Stopfen auf die Antriebsspindel aufgeschraubt werden kann. Zweckmäßigerweise weisen dann die Spindel ein Außengewinde und der Stopfen ein Innengewinde auf.

Vorteilhafterweise kann der Stopfen aus Metall und/oder aus Kunststoff gefertigt sein.

Wenn der Tilgerkanal in der Mitte einer Trennwand, die sich zwischen der Arbeitskammer und der Ausgleichskammer befindet, angeordnet ist, dann können die Schwingungen mit ihrer größten Amplitude übertragen werden.

Nachfolgend werden Ausführungsbeispiele anhand der beiliegenden Zeichnungen näher erläutert.

Im Einzelnen zeigen:
- Fig. 1: eine Schnittansicht durch ein Stützlager mit einem nicht erfindungsgemäßen Stopfen;
- Fig. 2: eine Schnittansicht durch eine erfindungsgemäßen Stopfen.

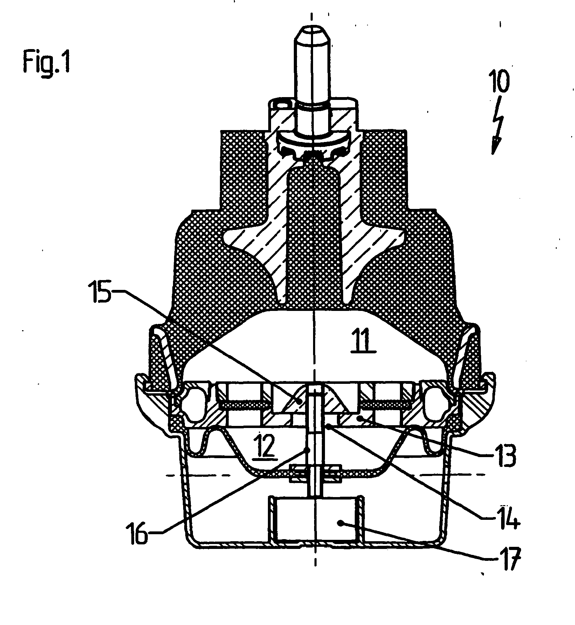

Fig. 1 zeigt ein Stützlager 10 mit einer Arbeitskammer 11 und einer Ausgleichskammer 12. Die Arbeitskammer 11 und die Ausgleichskammer 12 sind durch eine Trennwand 13 voneinander getrennt. In der Trennwand 13 ist eine Tilgerkanalöffnung 14 angebracht. Die Tilgerkanalöffnung 14 kann durch einen Stopfen 15 geöffnet und geschlossen werden. Der Stopfen 15 wird zum Verschließen der Tilgerkanalöffnung 14 von der Arbeitskammer 11 aus gegen die Tilgerkanalöffnung 14 gedrückt. Der Stopfen 15 ist mit einer Antriebsspindel 16 versehen. An der Antriebsspindel 16 ist ein Elektromotor 17 zur Betätigung des Stopfens 15 angeordnet.

Der Elektromotor 17 kann ein Gleichstrommotor oder ein Schrittmotor sein. Wenn der Elektromotor 17 ein Gleichstrommotor ist, kann dieser mit einem Hall-Geber oder einem induktiven Wegaufnehmer zur Wegabfrage ausgerüstet sein.

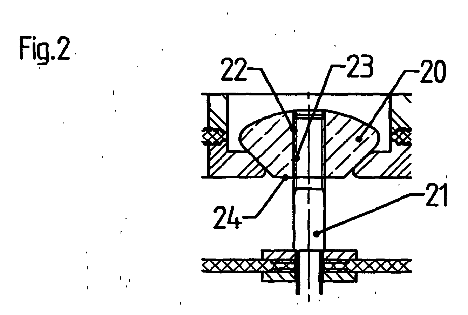

Der Stopfen 15 und die Antriebsspindel 16 können einstückig aus Kunststoff gefertigt sein. Es ist jedoch auch möglich einen Stopfen 20 und eine Antriebsspindel 21 einstückig auszubilden (siehe Fig. 2). Dann kann der Stopfen 20 ein Innengewinde 22 und die Antriebsspindel 21 ein Außengewinde 23 aufweisen, sodass der Stopfen 20 auf die Antriebsspindel 21 aufgeschraubt werden kann.

Der Stopfen 15 weist eine nicht erfindungsgemäße Pilzform auf. Die Pilzform liefert im Betrieb des Tilgerkanals besonders günstige Strömungsverhältnisse.

Dahingegen ist der erfindungsgemäße Stopfen 20 als ein Kegel ausgebildet. Der Kegel kann mit seiner Spitze in eine Tilgerkanalöffnung 24 eingeführt werden. Dabei wird der Stopfen 20 in der Öffnung 24 zentriert.

Die Tilgerkanalöffnung 14 ist in der Mitte der Trennwand 13 angeordnet. Dadurch können die Schwingungen mit ihrer größten Amplitude übertragen werden.

## Patentansprüche

1. Stützlager (10) mit einem eine Arbeitskammer (11) und eine Ausgleichskammer (12) verbindenden Tilgerkanal, der eine durch einen Stopfen (20) öffenbare und verschließbare Tilgerkanalöffnung (14, 24) aufweist, wobei der Stopfen (20) von der Arbeitskammer (11) aus gegen die Tilgerkanalöffnung (14, 24) pressbar ist,
**dadurch gekennzeichnet, dass** der Stopfen (20) einen abgerundeten oberen und einen kegelartigen unteren Bereich aufweist und mit dem kegelartigen unteren Bereich in Richtung Ausgleichkammer (12) selbstzentriert in die Tilgerkanalöffnung (14) einführbar und gegen diese pressbar ist.

2. Stützlager (10) nach Anspruch 1, **dadurch gekennzeichnet, dass** der Stopfen durch einen Elektromotor (17) antreibbar ist.

3. Stützlager (10) nach Anspruch 2, **dadurch gekennzeichnet, dass** der Elektromotor (17) ein Gleichstrommotor ist.

4. Stützlager (10) nach Anspruch 3, **dadurch gekennzeichnet, dass** der Gleichstrommotor mit einem Hall-Geber ausgerüstet ist.

5. Stützlager (10) nach Anspruch 3, **dadurch gekennzeichnet, dass** der Gleichstrommotor mit einem induktiven Wegaufnehmer ausgerüstet ist.

6. Stützlager (10) nach Anspruch 2, **dadurch gekennzeichnet, dass** der Stopfen durch einen Schrittmotor antreibbar ist.

7. Stützlager (10) nach einem der Ansprüche 1 bis 6, **dadurch gekennzeichnet, dass** der Stopfen (15, 20) und eine Antriebsspindel (16, 21) einstückig ausgebildet sind.

8. Stützlager (10) nach Anspruch 7, **dadurch gekennzeichnet, dass** der Stopfen (15, 20) und die Antriebsspindel (16, 21) aus Kunststoff gefertigt sind.

9. Stützlager (10) nach einem der Ansprüche 1 bis 6, **dadurch gekennzeichnet, dass** der Stopfen (15, 20) auf die Antriebsspindel (16, 21) aufschraubbar ist.

10. Stützlager (10) nach einem der Ansprüche 1 bis 9, **dadurch gekennzeichnet, dass** der Stopfen (15, 20) aus Metall und/oder aus Kunststoff gefertigt ist.

11. Stützlager nach einem der Ansprüche 1 bis 10, **dadurch gekennzeichnet, dass** der Tilgerkanal in der Mitte einer Trennwand (13) angeordnet ist, die sich zwischen der Arbeitskammer (11) und der Ausgleichskammer (12) befindet.

## Claims

1. Supporting bearing (10) with a vibration absorber duct which connects a working chamber (11) and a compensating chamber (12) and which has a vibration absorber duct orifice (14, 24) openable and closable by means of a plug (20), the plug (20) being capable of being pressed from the working chamber (11) towards the vibration absorber duct orifice (14, 24), **characterized in that** the plug (20) has a rounded upper and cone-like lower region and can be introduced with the cone-like lower region in the direction of the compensating chamber (12) into the vibration absorber duct orifice (14) in a self-centred manner and can be pressed against the latter.

2. Supporting bearing (10) according to Claim 1, **characterized in that** the plug can be driven by means of an electric motor (17).

3. Supporting bearing (10) according to Claim 2, **characterized in that** the electric motor (17) is a direct-current motor.

4. Supporting bearing (10) according to Claim 3, **characterized in that** the direct-current motor is equipped with a Hall generator.

5. Supporting bearing (10) according to Claim 3, **characterized in that** the direct-current motor is equipped with an inductive displacement transducer.

6. Supporting bearing (10) according to Claim 2, **characterized in that** the plug can be driven by means of a stepping motor.

7. Supporting bearing (10) according to one of Claims 1 to 6, **characterized in that** the plug (15, 20) and a drive spindle (16, 21) are produced in one piece.

8. Supporting bearing (10) according to Claim 7, **characterized in that** the plug (15, 20) and the drive spindle (16, 21) are manufactured from plastic.

9. Supporting bearing (10) according to one of Claims 1 to 6, **characterized in that** the plug (15, 20) can be screwed onto the drive spindle (16, 21).

10. Supporting bearing (10) according to one of Claims 1 to 9, **characterized in that** the plug (15, 20) is manufactured from metal and/or from plastic.

11. Supporting bearing (10) according to one of Claims 1 to 10, **characterized in that** the vibration absorber duct is arranged in the middle of a partition (13) which is located between the working chamber (11) and the compensating chamber (12).

## Revendications

1. Palier de support (10) avec un canal de compensation reliant une chambre de travail (11) et une chambre d'équilibrage (12), qui présente une ouverture de canal de compensation (14, 24) pouvant être ouverte et fermée au moyen d'un bouchon (20), dans lequel le bouchon (20) peut être pressé contre l'ouverture de canal de compensation (14, 24) à partir de la chambre de travail (11), **caractérisé en ce que** le bouchon (20) présente une région supérieure arrondie et une région inférieure conique et peut être introduit dans l'ouverture de canal de compensation (14) et être pressé contre celle-ci en se centrant automatiquement avec la région inférieure conique.

2. Palier de support (10) selon la revendication 1, **caractérisé en ce que** le bouchon peut être déplacé au moyen d'un moteur électrique (17).

3. Palier de support (10) selon la revendication 2, **caractérisé en ce que** le moteur électrique (17) est un moteur à courant continu.

4. Palier de support (10) selon la revendication 3, **caractérisé en ce que** le moteur à courant continu est équipé d'un capteur de Hall.

5. Palier de support (10) selon la revendication 3, **caractérisé en ce que** le moteur à courant continu est équipé d'un enregistreur de course par induction.

6. Palier de support (10) selon la revendication 2, **caractérisé en ce que** le bouchon peut être déplacé au moyen d'un moteur pas à pas.

7. Palier de support (10) selon l'une quelconque des revendications 1 à 6, **caractérisé en ce que** le bouchon (15, 20) et une broche d'entraînement (16, 21) sont formés en une seule pièce.

8. Palier de support (10) selon la revendication 7, **caractérisé en ce que** le bouchon (15, 20) et la broche d'entraînement (16, 21) sont fabriqués en matière synthétique.

9. Palier de support (10) selon l'une quelconque des revendications 1 à 6, **caractérisé en ce que** le bouchon (15, 20) peut être vissé sur la broche d'entraînement (16, 21).

10. Palier de support (10) selon l'une quelconque des revendications 1 à 9, **caractérisé en ce que** le bouchon (15, 20) est fabriqué en métal et/ou en matière synthétique.

11. Palier de support selon l'une quelconque des revendications 1 à 10, **caractérisé en ce que** le canal de compensation est disposé au milieu d'une paroi de séparation (13), qui se trouve entre la chambre de travail (11) et la chambre d'équilibrage (12).
